# EUROPEAN PATENT APPLICATION

(11) **EP 2 620 955 A1**
(43) Date of publication of application: **31.07.2013**
(21) Application number: 11826906.7
(22) Date of filing: 22.09.2011
(51) Int. Cl.: H01F 1/06, B22F 1/00, B22F 1/02, B22F 9/22, C01B 21/06, C22C 29/16, H01F 1/08

(54) **FERROMAGNETIC PARTICLE POWDER, METHOD FOR PRODUCING SAME, ANISOTROPIC MAGNET, AND BONDED MAGNET**

(30) Priority: 24.09.2010 JP 2010214366
(71) Applicant: Toda Kogyo Corporation, Hiroshima 739-0652 (JP); Tohoku University, Aoba-ku Sendai-shi Miyagi 980-8577 (JP)
(72) Inventor: TAKAHASHI, Migaku, Sendai-shi Miyagi 980-8577 (JP); OGAWA, Tomoyuki, Sendai-shi Miyagi 980-8577 (JP); OGATA, Yasunobu, Sendai-shi Miyagi 980-8577 (JP); SAKUMA, Akimasa, Sendai-shi Miyagi 980-8577 (JP); KOBAYASHI, Naoya, Otake-shi Hiroshima 739-0652 (JP); POLWATTA GALLAGE, Chammika Ruwan, Otake-shi Hiroshima 739-0652 (JP); KOHARA, Kaori, Otake-shi Hiroshima 739-0652 (JP)
(74) Representative: Raynor, Stuart Andrew
(86) International application number: PCT/JP2011/071636
(87) International publication number: WO 2012/039461

(57) **Abstract**

The present invention relates to ferromagnetic particles comprising an Fe₁₆N₂ compound phase in an amount of not less than 70% as measured by Mössbauer spectrum, and at least one metal element X selected from the group consisting of Mn, Ni, Ti, Ga, Al, Ge, Zn, Pt and Si in such an amount that a molar ratio of the metal element X to Fe is 0.04 to 25%, the ferromagnetic particles having a BHₘₐₓ value of not less than 5 MGOe, and a process for producing the ferromagnetic particles, and further relates to an anisotropic magnet or a bonded magnet which is obtained by magnetically orienting the ferromagnetic particles. The ferromagnetic particles according to the present invention can be produced in an industrial scale and are in the form of Fe₁₆N₂ particles comprising different kinds of metal elements having a large BHₘₐₓ value.

## Description

### TECHNICAL FIELD

The present invention relates to ferromagnetic particles comprising an Fe₁₆N₂-based compound having a BHₘₐₓ value as large as not less than 5 MGOe as a main phase, and a process for producing the ferromagnetic particles. Also, according to the present invention, there are provided an anisotropic magnet and a bonded magnet which are produced using the ferromagnetic particles.

### BACKGROUND ART

At present, various magnetic materials such as Sr-based ferrite magnetic particles and Nd-Fe-B-based magnetic particles have been practically used. However, for the purpose of further enhancing properties of these materials, various improvements have been conducted, and in addition, various attempts have also been conducted to develop novel materials. Among the above materials, Fe-N-based compounds such as Fe₁₆N₂ have been noticed.

Among the Fe-N-based compounds, α"-Fe₁₆N₂ is known as a metastable compound crystallized when subjecting a martensite or a ferrite in which nitrogen is incorporated in the form of a solid solution to annealing for a long period of time. The α" -Fe₁₆N₂ has a "bct" crystal structure, and therefore it is expected that the α"-Fe₁₆N₂ provides a giant magnetic substance having a large saturation magnetization. However, as understood from the wording "metastable compound", there have been reported only very few cases where the compounds are successfully chemically synthesized in the form of isolated particles.

Hitherto, in order to obtain an α"-Fe₁₆N₂ single phase, various methods such as a vapor deposition method, an MBE method (molecular beam epitaxy method), an ion implantation method, a sputtering method and an ammonia nitridation method have been attempted. However, production of more stabilized γ'-Fe₄N or ε-Fe₂₋₃N is accompanied with an eutectic crystal of martensite (α'-Fe)-like metal or ferrite (α-Fe)-like metal, which tends to cause difficulty in producing the α"-Fe₁₆N₂ single phase compound in an isolated state. In some cases, it has been reported that the α" -Fe₁₆N₂ single phase compound is produced in the form of a thin film. However, the α"-Fe₁₆N₂ single phase compound in the form of such a thin film may be applied to magnetic materials only by a limited range, and tends to be unsuitable for use in still more extensive application fields. Therefore, it has been demanded that the above compound is obtained in the form of particles or the like.

The following known techniques concerning the α"-Fe₁₆N₂ have been proposed.

### PRIOR ART DOCUMENTS

### PATENT DOCUMENTS

Patent Document 1: Japanese Patent Application Laid-Open (KOKAI) No. 11-340023
Patent Document 2: Japanese Patent Application Laid-Open (KOKAI) No. 2000-277311
Patent Document 3: Japanese Patent Application Laid-Open (KOKAI) No. 2009-84115
Patent Document 4: Japanese Patent Application Laid-Open (KOKAI) No. 2008-108943
Patent Document 5: Japanese Patent Application Laid-Open (KOKAI) No. 2008-103510
Patent Document 6: Japanese Patent Application Laid-Open (KOKAI) No. 2007-335592
Patent Document 7: Japanese Patent Application Laid-Open (KOKAI) No. 2007-258427
Patent Document 8: Japanese Patent Application Laid-Open (KOKAI) No. 2007-134614
Patent Document 9: Japanese Patent Application Laid-Open (KOKAI) No. 2007-36027
Patent Document 10: Japanese Patent Application Laid-Open (KOKAI) No. 2009-249682

### NON-PATENT DOCUMENTS

Non-Patent Document 1: M. Takahashi, H. Shoji, H. Takahashi, H. Nashi, T. Wakiyama, M. Doi and M. Matsui, "J. Appl. Phys.", Vol. 76, pp. 6642-6647, 1994.
Non-Patent Document 2: Y. Takahashi, M. Katou, H. Shoji and M. Takahashi, "J. Magn. Magn. Mater.", Vol. 232, pp. 18-26, 2001.

### SUMMARY OF THE INVENTION

### PROBLEM TO BE SOLVED BY THE INVENTION

However, the techniques described in the above Patent Documents 1 to 10 and Non-Patent Documents 1 and 2 have still failed to improve properties of the magnetic materials to a sufficient extent.

That is, in Patent Document 1, it is described that iron particles on which a surface oxide film is present are subjected to reducing treatment and then to nitridation treatment to obtain Fe₁₆N₂. However, in the Patent Document 1, it is not taken into consideration to enhance a maximum energy product of the material, and Patent Document 1 actually fails to attain a maximum energy product of not less than 5 MGOe. In addition, as described in Examples of Patent Document 1, the nitridation treatment requires such a prolonged time as 10 days, thereby failing to provide an industrially suitable process.

Also, in Patent Document 2, it is described that iron oxide particles are subjected to reducing treatment to produce metallic iron particles, and the resulting metallic iron particles are subjected to nitridation treatment to obtain Fe₁₆N₂. However, in Patent Document 2, the resulting particles are used as magnetic particles for magnetic recording media and therefore tend to be unsuitable as a hard magnetic material having a maximum energy product as high as not less than 5 MGOe.

Also, in Patent Documents 3 to 9, there are described giant magnetic substances for magnetic recording materials which can be used instead of ferrite. However, these magnetic substances are obtained in the form of not an α" - Fe₁₆N₂ single phase but a mixed phase of still stabler γ'-Fe₄N or ε-Fe₂₋₃N, and martensite (ε'-Fe)-like metal or ferrite (α-Fe)-like metal.

Also, in Patent Document 10, it is described that the use of additive elements is essential, but there are described no details concerning the need therefor. Further, in view of magnetic properties of the obtained product, the resulting particles tend to be unsuitable as a hard magnetic material having a maximum energy product as high as not less than 5 MGOe.

In Non-Patent Documents 1 and 2, there is such a scientifically interesting report that the α"-Fe₁₆N₂ single phase has been successfully produced in the form of a thin film. However, the α "-Fe₁₆N₂ single phase in the form of such a thin film is usable in only limited applications, and therefore unsuitable for use in more extensive applications. Further, these conventional materials have problems concerning productivity and economy when producing a generally used magnetic material therefrom.

In consequence, an object of the present invention is to provide Fe₁₆N₂ single phase particles having a BHₘₐₓ value as high as not less than 5 MGOe and a process for producing the particles, and an anisotropic magnet and a bonded magnet obtained using the particles.

### MEANS FOR SOLVING THE PROBLEM

The above object can be achieved by the following aspects of the present invention.

That is, according to the present invention, there are provided ferromagnetic particles comprising an Fe₁₆N₂ compound phase in an amount of not less than 70% as measured by Mössbauer spectrum, and at least one metal element X selected from the group consisting of Mn, Ni, Ti, Ga, Al, Ge, Zn, Pt and Si in such an amount that a molar ratio of the metal element X to Fe is 0.04 to 25%, the ferromagnetic particles having a BHₘₐₓ value of not less than 5 MGOe (Invention 1).

Also, according to the present invention, there are provided the ferromagnetic particles as described in the above Invention 1, further comprising an Si compound and/or an Al compound with which a surface of the respective ferromagnetic particles is coated (Invention 2).

Also, according to the present invention, there are provided the ferromagnetic particles as described in the above Invention 1 or 2, wherein a saturation magnetization value σₛ of the ferromagnetic particles is not less than 130 emu/g, and a coercive force H_{c} of the ferromagnetic particles is not less than 600 Oe (Invention 3).

Also, according to the present invention, there are provided the ferromagnetic particles as described in any one of the above Inventions 1 to 3, wherein a BET specific surface area of the ferromagnetic particles is 3 to 80 m²/g (Invention 4).

In addition, according to the present invention, there is provided a process for producing the ferromagnetic particles as described in any one of the above Inventions 1 to 4, comprising the step of subjecting iron compound particles previously passed through a mesh having a size of not more than 250 *µ*m to reducing treatment and then to nitridation treatment, said iron compound particles used as a starting material being formed of iron oxide or iron oxyhydroxide which has a BET specific surface area of 50 to 250 m²/g, an average major axis diameter of 50 to 450 nm and an aspect ratio (major axis diameter/minor axis diameter) of 3 to 25 and comprises a metal element X (wherein X is at least one element selected from the group consisting of Mn, Ni, Ti, Ga, Al, Ge, Zn, Pt and Si) in such an amount that a molar ratio of the metal element X to Fe is 0.04 to 25% (Invention 5).

Also, according to the present invention, there is provided the process for producing the ferromagnetic particles as described in the above Invention 5, wherein a surface of the respective iron compound particles is further coated with an Si compound and/or an Al compound, and the resulting coated particles are passed through a mesh having a size of 250 *µ*m and then subjected to the reducing treatment (Invention 6).

Further, there is provided an anisotropic magnet comprising the ferromagnetic particles as described in any one of the above Inventions 1 to 4 (Invention 7).

Furthermore, there is provided a bonded magnet comprising the ferromagnetic particles as described in any one of the above Inventions 1 to 4 (Invention 8).

### EFFECT OF THE INVENTION

The ferromagnetic particles according to the present invention have a large maximum energy product BHₘₐₓ and therefore can be suitably used as a magnetic material.

Further, in the process for producing the ferromagnetic particles according to the present invention, it is possible to readily produce particles comprising an Fe₁₆N₂ compound having a large maximum energy product BHₘₐₓ as a main phase, and therefor the production process is suitable as a process for producing ferromagnetic particles.

### PREFERRED EMBODIMENTS FOR CARRYING OUT THE INVENTION

The ferromagnetic particles according to the present invention comprise an Fe₁₆N₂ compound phase in an amount of not less than 70% as measured by Mössbauer spectrum. In the Mössbauer spectrum, upon production of Fe₁₆N₂, a peak of an iron site having an internal magnetic field of not less than 330 kOe is observed. In particular, the peak appears in the vicinity of 395 kOe.

In general, when the content of other phases is large, the resulting particles tend to strongly exhibit properties as those of a soft magnet and therefore tend to be unsuitable as a material for a ferromagnetic hard magnet. However, the ferromagnetic particles of the present invention can exhibit properties as a material for a ferromagnetic hard magnet to a sufficient extent.

The ferromagnetic particles according to the present invention comprise at least one metal element X selected from the group consisting of Mn, Ni, Ti, Ga, Al, Ge, Zn, Pt and Si in such an amount that a molar ratio of the metal element X to Fe is 0.04 to 25%. When the molar ratio of the metal element X to Fe is less than 0.04 mol%, the resulting ferromagnetic particles may fail to exhibit a maximum energy product BHₘₐₓ of more than 5 MGOe. On the contrary, when the molar ratio of the metal element X to Fe is more than 25 mol%, an apparent relative amount of Fe₁₆N₂ produced tends to be reduced so that the BHₘₐₓ value tends to be less than 5 MGOe. The content of the metal element X is more preferably controlled such that the molar ratio of the metal element X to Fe is 0.5 to 23%.

The ferromagnetic particles according to the present invention have a maximum energy product BHₘₐₓ of not less than 5 MGOe. When the maximum energy product BHₘₐₓ of the ferromagnetic particles is less than 5 MGOe, the ferromagnetic particles may fail to exhibit sufficient magnetic properties required for a hard magnetic material. The maximum energy product BHₘₐₓ of the ferromagnetic particles is preferably not less than 6.0 MGOe, and more preferably not less than 6.5 MGOe.

The ferromagnetic particles according to the present invention preferably have a saturation magnetization value σₛ of not less than 130 emu/g and a coercive force H_{c} of not less than 600 Oe. When the saturation magnetization value σₛ and the coercive force H_{c} of the ferromagnetic particles are respectively out of the above-specified ranges, the resulting ferromagnetic particles may fail to exhibit sufficient magnetic properties required for a hard magnetic material. The saturation magnetization value σₛ of the ferromagnetic particles is more preferably not less than 135 emu/g, and the coercive force H_{c} of the ferromagnetic particles is more preferably not less than 630 Oe and still more preferably not less than 650 Oe.

The ferromagnetic particles according to the present invention preferably have a specific surface area of 3 to 80 m²/g. When the specific surface area of the ferromagnetic particles is less than 3 m²/g or more than 80 m²/g, it may be difficult not only to obtain the ferromagnetic particles comprising an Fe₁₆N₂ compound phase in an amount of not less than 70% as measured by Mössbauer spectrum, but also to attain desired properties including BHₘₐₓ and H_{c}. The specific surface area of the ferromagnetic particles is more preferably 4 to 75 m²/g and still more preferably 5 to 70 m²/g.

Next, the process for producing the ferromagnetic particles according to the present invention is described.

The ferromagnetic particles according to the present invention may be produced as follows. That is, as the starting material, there are used iron compound particles formed of iron oxide or iron oxyhydroxide which has a BET specific surface area of 50 to 250 m²/g, an average major axis diameter of 50 to 450 nm and an aspect ratio (major axis diameter/minor axis diameter) of 3 to 25 and comprises a metal element X (wherein X is at least one element selected from the group consisting of Mn, Ni, Ti, Ga, Al, Ge, Zn, Pt and Si) in such an amount that a molar ratio of the metal element X to Fe is 0.04 to 25%. The iron compound particles are passed through a mesh having a size of not more than 250 *µ*m, and subjected to reducing treatment and then to nitridation treatment, thereby obtaining the aimed ferromagnetic particles.

The ferromagnetic particles according to the present invention may also be produced by passing the iron compound particles through a mesh having a size of not more than 250 *µ*m and subjecting the iron compound particles to reducing treatment and then to nitridation treatment, if required, after coating the surface of the respective iron compound particles with an Si compound and/or an Al compound.

The iron compound particles used in the present invention comprise a metal element X in such an amount that a molar ratio of the metal element X to Fe is 0.04 to 25%. The method of adding the metal element X is not particularly limited. For example, the metal element X may be added when synthesizing the iron oxide or iron oxyhydroxide as the iron compound particles used as the starting material by a wet reaction method, etc., and then precipitated by neutralization thereof. Alternatively, there may be used the method in which a solution prepared by dissolving a raw material salt of the metal element X in alcohol or the like is mixed with the iron compound particles or paste, and the resulting mixture is then dried.

The raw material used for adding the metal element X is not particularly limited. As the raw material for addition of the metal element X, there may be used those compounds which tend to hardly remain as impurities in the resulting particles even when subjected to heat treatments such as dehydration, reduction and nitridation. Preferred examples of the compounds include oxalates, acetates, oxides, metals, nitrates and nitrides. The mixed condition of the raw iron compound particles and the metal element X is not particularly limited, and may be, for example, in the form of an oxide, a nitride, a nitrate, an acetate, an oxalate, a metal, or may be in the form of a solid solution in the raw iron compound. In addition, except for the case where the metal element X is present in the form of a solid solution in the raw iron compound, the metal element X may be ideally present in such a condition as dispersed as finely as possible on the surface of the respective raw iron compound particles.

As the iron compound particles as the starting material, there may be used iron oxide or iron oxyhydroxide. Examples of the iron oxide or iron oxyhydroxide include magnetite, γ-Fe₂O₃, α-Fe₂O₃, α-FeOOH, β-FeOOH, γ-FeOOH and FeO, although not particularly limited thereto. The starting material may be in the form of a single phase, or may comprise impurities. As the impurities, the iron compound particles may also comprise iron oxide or iron oxyhydroxide other than those contained in a main phase thereof.

The particle shape of iron oxide particles or iron oxyhydroxide particles used as the iron compound particles as the starting material is not particularly limited, and may be of any shape such as an acicular shape, a granular shape, a spindle shape and a rectangular shape.

The specific surface area of the iron compound particles as the starting material is preferably 50 to 250 m²/g. When the specific surface area of the iron compound particles is less than 50 m²/g, the nitridation tends to hardly proceed, so that it may be difficult to obtain the aimed ferromagnetic particles comprising an Fe₁₆N₂ compound phase in an amount of not less than 70% as measured by Mössbauer spectrum. When the specific surface area of the iron compound particles is more than 250 m²/g, the nitridation tends to excessively proceed, so that it may also be difficult to obtain the aimed ferromagnetic particles comprising an Fe₁₆N₂ compound phase in an amount of not less than 70% as measured by Mössbauer spectrum. The specific surface area of the iron compound particles is more preferably 55 to 230 m²/g and still more preferably 60 to 200 m²/g.

The iron compound particles as the starting material preferably have an average major axis diameter of 50 to 450 nm. When the average major axis diameter of the iron compound particles is more than 450 nm, it may be difficult to obtain the aimed ferromagnetic particles comprising an Fe₁₆N₂ compound phase in an amount of not less than 70% as measured by Mössbauer spectrum. When the iron compound particles are small particles having an average major axis diameter of less than 50 nm, the content of superparamagnetic components in the resulting particles tends to be increased, so that the resulting particles tend to be deteriorated in properties as a material for a ferromagnetic hard magnet. The average major axis diameter of the iron compound particles is more preferably 70 to 400 nm and still more preferably 80 to 350 nm.

The iron compound particles as the starting material preferably have an aspect ratio (major axis diameter/minor axis diameter) of 3 to 25. When the aspect ratio of the iron compound particles is more than the above-specified range, it may be difficult to obtain the aimed ferromagnetic particles comprising an Fe₁₆N₂ compound phase in an amount of not less than 70% as measured by Mössbauer spectrum. The aspect ratio of the iron compound particles is more preferably 3 to 24 and still more preferably 3 to 23.

In the present invention, the surface of the respective iron compound particles may be coated with an Si compound and/or an Al compound, if required. The iron compound particles tend to suffer from sintering therebetween when subjected to heat-reducing treatment for obtaining a metallic iron as a raw material to be subjected to the nitridation treatment. To avoid occurrence of the sintering, the surface of the respective iron compound particles may be coated. When the surface of the respective iron compound particles is coated with an Si compound and/or an Al compound, it is possible to lower the temperature used in the heat treatments (such as reducing treatment and nitridation treatment) and suppress occurrence of proceeding of local excessive nitridation.

The coating of the respective iron compound particles with the Si compound and/or the Al compound may be conducted as follows. That is, after adjusting a pH value of a water suspension prepared by suspending the iron compound particles in water, the Si compound and/or the Al compound are added to the water suspension and mixed and stirred therewith, followed, if required, by further adjusting the pH value of the mixture obtained after the mixing and stirring, thereby coating the surface of the respective iron compound particles with the Si compound and/or the Al compound. Next, the thus obtained coated particles may be subjected to filtration, washing with water, drying and pulverization.

Examples of the Si compound usable in the present invention include water glass #3, sodium orthosilicate, sodium metasilicate, colloidal silica and silane coupling agents.

Examples of the Al compound usable in the present invention include aluminum salts such as aluminum acetate, aluminum sulfate, aluminum chloride and aluminum nitrate, aluminic acid alkali salts such as sodium aluminate, alumina sol and aluminum coupling agents.

The coating amounts of the Si compound and/or the Al compound are respectively preferably 1000 to 20000 ppm in terms of Si or in terms of Al based on the iron compound particles. When the coating amounts of the Si compound and/or the Al compound are respectively less than 1000 ppm, it may be difficult to attain a sufficient effect of suppressing sintering between the particles upon the heat treatments. When the coating amounts of the Si compound and/or the Al compound are respectively more than 20000 ppm, the content of non-magnetic components in the resulting particles tends to be undesirably increased. The coating amounts of the Si compound and/or the Al compound are respectively more preferably 1500 to 15000 ppm and still more preferably 1500 to 13000 ppm.

The specific surface area of the iron oxide particles or iron oxyhydroxide particles coated with the Si compound and/or the Al compound is preferably 50 to 250 m²/g. When the specific surface area of the iron oxide particles or iron oxyhydroxide particles coated is less than 50 m²/g, the nitridation tends to hardly proceed, so that it may be difficult to obtain the aimed ferromagnetic particles comprising an Fe₁₆N₂ compound phase in an amount of not less than 70% as measured by Mössbauer spectrum. When the specific surface area of the iron oxide particles or iron oxyhydroxide particles coated is more than 250 m²/g the nitridation tends to excessively proceed, so that it may also be difficult to obtain the aimed ferromagnetic particles comprising an Fe₁₆N₂ compound phase in an amount of not less than 70% as measured by Mössbauer spectrum. The specific surface area of the iron oxide particles or iron oxyhydroxide particles coated with the Si compound and/or the Al compound is more preferably 55 to 230 m²/g and still more preferably 60 to 200 m²/g.

In the present invention, the iron compound particles as the starting material may also be coated with a compound of a rare earth element such as Y and La or a compound of a transition metal such as Co and Ni in addition to the above Si compound and Al compound.

The iron compound particles as the starting material or the iron compound particles coated with the Si compound and/or the Al compound are preferably previously passed through a mesh having a size of not more than 250 *µ*m before subjected to the heat treatments. When the mesh size is more than 250 *µ*m, it may be difficult to obtain ferromagnetic particles capable of exhibiting desired magnetic properties. The mesh size is more preferably not more than 236 *µ*m. In order to adjust the mesh size to a desired value, the iron compound particles may be subjected to pulverization treatment by an ordinary method, if required. The pulverization method is not particularly limited, and may be selected from those methods using an atomizer, a mortar, etc.

Next, the iron compound particles as the starting material (the iron oxyhydroxide particles or the iron oxyhydroxide particles whose surface is coated with the Si compound and/or the Al compound) are subjected to dehydration treatment. However, the iron compound particles may also be directly subjected to the next reducing treatment without via the dehydration treatment.

The temperature of the dehydration treatment is 80 to 350°C. When the temperature of the dehydration treatment is lower than 80°C, substantially no dehydration treatment tends to proceed. When the temperature of the dehydration treatment is higher than 350°C, it may be difficult to obtain metallic iron particles at a low temperature in the next reducing treatment. The temperature of the dehydration treatment is preferably 85 to 300°C.

The atmosphere used upon the dehydration treatment is preferably air or a nitrogen atmosphere.

Next, the iron compound particles, or the iron compound particles whose surface is coated with the Si compound and/or the Al compound, are subjected to reducing treatment.

The temperature of the reducing treatment is preferably 280 to 650°C. When the temperature of the reducing treatment is lower than 280°C, the iron compound particles may fail to be reduced into metallic iron to a sufficient extent. When the temperature of the reducing treatment is more than 650°C, although the iron compound particles can be sufficiently reduced into metallic iron, the sintering between the particles also tends to undesirably proceed. The temperature of the reducing treatment is more preferably 300 to 600°C.

The reducing treatment time is not particularly limited, and is preferably 1 to 24 h. When the reducing treatment time is more than 24 h, the sintering between the particles tends to proceed depending upon the reducing treatment temperature, so that the nitridation treatment as the later stage treatment tends to hardly proceed. When the reducing treatment time is less than 1 h, the reducing treatment tends to be often insufficient. The reducing treatment time is more preferably 1.5 to 15 h.

The atmosphere used upon the reducing treatment is preferably a hydrogen atmosphere.

After conducting the reducing treatment, the nitridation treatment is carried out.

The temperature of the nitridation treatment is 100 to 200°C. When the temperature of the nitridation treatment is lower than 100°C, the nitridation treatment tends to hardly proceed to a sufficient extent. When the temperature of the nitridation treatment is higher than 200°C, γ'-Fe₄N or ε-Fe₂₋₃N tends to be undesirably produced, so that it may be difficult to obtain the aimed ferromagnetic particles comprising an Fe₁₆N₂ compound phase in an amount of not less than 70% as measured by Mössbauer spectrum. The temperature of the nitridation treatment is preferably 105 to 180°C.

The nitridation treatment time is preferably not more than 50 h. When the step is completed for a time period as short as possible, the yield per unit time can be increased, so that it is possible to provide a production process which is excellent in industrial productivity. Therefore, the nitridation treatment time is more preferably not more than 36 h.

The atmosphere used upon the nitridation treatment is preferably an NH₃ atmosphere, and may also be used in the form of a mixture of NH₃ with N₂, H₂, superheated steam, etc.

Next, the anisotropic magnet according to the present invention is described.

The magnetic particles of the ferromagnetic magnet according to the present invention may be controlled so as to attain desired magnetic properties (such as a coercive force, a residual magnetic flux density and a maximum energy product) according to the purposes and applications as aimed.

The magnetic orientation method of the magnet is not particularly limited. For example, the ferromagnetic particles comprising an Fe₁₆N₂ compound phase in an amount of not less than 70% as measured by Mössbauer spectrum or the ferromagnetic particles comprising an Fe₁₆N₂ compound phase in an amount of not less than 70% as measured by Mössbauer spectrum which are coated with the Si compound and/or the Al compound may be mixed and kneaded together with a dispersant, etc., in an EVA resin (ethylene-vinyl acetate resin) at a temperature not lower than a glass transition temperature thereof and molded, and a desired external magnetic field may be applied to the resulting molded product at a temperature nearly exceeding the glass transition temperature to accelerate a magnetic orientation of the molded product. Alternatively, a resin such as urethane resins, an organic solvent and the above ferromagnetic particles may be strongly mixed with each other using a paint shaker, etc., and pulverized to prepare an ink, and the resulting ink may be applied and printed on a resin film with a blade or by a roll-to-roll method, and rapidly passed through a magnetic field to magnetically orient the resulting coated film.

Next, a resin composition for the bonded magnet according to the present invention is described.

The resin composition for the bonded magnet according to the present invention may be prepared by dispersing the ferromagnetic particles according to the present invention in a binder resin. The resin composition for the bonded magnet comprises 85 to 99% by weight of the ferromagnetic particles, and the balance comprising the binder resin and other additives.

The binder resin used in the resin composition for the bonded magnet may be selected from various resins depending upon the molding method used. In the case of an injection molding method, an extrusion molding method and a calender molding method, thermoplastic resins may be used as the binder resin. In the case of a compression molding method, thermosetting resins may be used as the binder resin. Examples of the thermoplastic resins include nylon (PA)-based resins, polypropylene (PP)-based resins, ethylene-vinyl acetate (EVA)-based resins, polyphenylene sulfide (PPS)-based resins, liquid crystal plastic (LCP)-based resins, elastomer-based resins and rubber-based resins. Examples of the thermosetting resins include epoxy-based resins and phenol-based resins.

Meanwhile, upon production of the resin composition for the bonded magnet, in order to facilitate the molding procedure and attain sufficient magnetic properties, in addition to the binder resin, there may also be used various known additives such as a plasticizer, a lubricant and a coupling agent, if required. Further, various other kinds of magnet particles such as ferrite magnet particles may also be mixed in the resin composition.

These additives may be adequately selected according to the aimed applications. As the plasticizer, commercially available products may be appropriately used according to the resins used. The total amount of the plasticizer added is about 0.01 to about 5.0% by weight based on the weight of the binder resin.

Examples of the lubricant usable in the present invention include stearic acid and derivatives thereof, inorganic lubricants, oil-based lubricants. The lubricant may be used in an amount of about 0.01 to about 1.0% by weight based on a whole weight of the bonded magnet.

As the coupling agent, commercially available products may be used according to the resins and fillers used. The coupling agent may be used in an amount of about 0.01 to about 3.0% by weight based on the weight of the binder resin used.

The resin composition for the bonded magnet according to the present invention may be produced by mixing and kneading the ferromagnetic particles with the binder resin.

The mixing of the ferromagnetic particles with the binder resin may be carried out using a mixing device such as a Henschel mixer, a V-shaped mixer and a Nauta mixer, whereas the kneading may be carried out using a single-screw kneader, a twin-screw kneader, a mill-type kneader, an extrusion kneader or the like.

Next, the bonded magnet according to the present invention is described.

The magnetic properties of the bonded magnet may be controlled so as to attain desired magnetic properties (such as a coercive force, a residual magnetic flux density and a maximum energy product) according to the aimed applications.

The bonded magnet according to the present invention may be produced by subjecting the above resin composition for the bonded magnet to a molding process by a known molding method such as an injection molding method, an extrusion molding method, a compression molding method or a calender molding method, and then subjecting the resulting molded product to electromagnet magnetization or pulse magnetization by an ordinary method to form the bonded magnet.

### EXAMPLES

Next, the present invention is described in more detail by the following Examples. However, these Examples are only illustrative and not intended to limit the present invention thereto.

The specific surface area of the iron compound particles (iron oxide or iron oxyhydroxide) as the starting material or the resulting ferromagnetic particles was measured by a B.E.T. method based on nitrogen absorption.

The primary particle size of the iron compound particles (iron oxide or iron oxyhydroxide) as the starting material or the resulting ferromagnetic particles was measured using a transmission electron microscope "JEM-1200EXII" manufactured by Nippon Denshi Co., Ltd. In this case, particle sizes of 120 particles randomly selected were measured to obtain an average value thereof.

The compositions of the iron compound particles (iron oxide or iron oxyhydroxide) as the starting material or the resulting ferromagnetic particles were determined by analyzing a solution prepared by dissolving the sample in an acid under heating using a plasma emission spectroscopic analyzer "SPS4000" manufactured by Seiko Denshi Kogyo Co., Ltd. The sample particles coated with Si and/or Al were added with a concentrated sodium hydroxide solution to dissolve Si and/or Al therein, and subjected to filtration, water-washing and then drying at 60°C. The weight of the thus dried sample was measured to determine a change in weight thereof between before and after the above treatment and thereby analyze amounts of Si and/or Al. Then, the resulting particles were dissolved in an acid, and the obtained solution was analyzed using the plasma emission spectroscopic apparatus in the same manner as described above.

The constituting phases of the starting material and the resulting ferromagnetic particles were determined by identification using a powder X-ray diffractometer (XRD) "RINT-2500" manufactured by Rigaku Co., Ltd., by electron diffraction (ED) using a transmission electron microscope "JEM-1200EX" manufactured by Nippon Denshi Co., Ltd., and an ultra-high resolution spectroscopic electron microscope (HREM) "HF-2000" manufactured by Hitachi High-Technologies Corp., or by analysis and evaluation using an electron energy loss spectroscopy (EELS), an energy dispersive X-ray spectroscopy (EDS) or a scanning transmission electron microscope (STEM). In the ED or the analysis and evaluation using EELS, STEN or EDS, it was possible to determine whether or not impurity phases such as α-Fe, Fe₄N and Fe₃₋ₓN, or the metal element X added were locally present in a micro state.

The magnetic properties of the obtained ferromagnetic particles were measured at room temperature (300 K) in a magnetic field of 0 to 9 T using a physical property measurement system (PPMS + VSM) manufactured by Quantum Design Japan Co., Ltd. Separately, the temperature dependency of a magnetic susceptibility of the ferromagnetic particles in a temperature range of from 5 K to 300 K was also evaluated.

The measurement of Mössbauer spectrum of the obtained ferromagnetic particles was carried out as follows. That is, the ferromagnetic particles were intimately mixed with a silicone grease in a glove box in an argon atmosphere. The resulting mixture was wrapped with an aluminum foil and subjected to the measurement of Mössbauer spectrum in a temperature range of from a liquid helium temperature to room temperature for 3 to 4 days. Further, the obtained data was analyzed to determine a ratio (volume ratio) of Fe₁₆N₂ produced in the obtained ferromagnetic particles. As impurity phases, α-Fe, Fe₄N, Fe₃₋ₓN, para-components of iron oxide or the like were analyzed.

### Example 1:

### <Preparation of starting material>

Goethite particles having a minor axis diameter of 17 nm, a major axis diameter of 110 nm, an aspect ratio of 6.47 and a specific surface area of 123 m²/g were produced from ferric sulfate, sodium hydroxide and sodium carbonate. The resulting goethite particles were separated by filtration using a nutshe, and the resulting particles were washed with pure water in an amount of 150 mL per 5 g of the sample. Successively, the obtained particles were dried at 60°C using a vacuum dryer, and only aggregated particles having a particle size of not more than 100 *µ*m were extracted using an atomizer mill and a vibration sieve. The thus extracted goethite particles as a whole were intimately mixed with an aqueous solution of titanium (IV) oxysulfate as a Ti raw material in such an amount that a molar ratio of titanium to Fe contained in the goethite particles is 0.06%. The resulting mixture was heated to 250°C in air at a rate of 3°C/min to dehydrate the particles and decompose the Ti raw material.

### <Reducing treatment and nitridation treatment of starting material>

The above obtained sample particles in an amount of 50 g were charged in an alumina sagger (125 mm x 125 mm x 30 mm in depth), and allowed to stand in a heat treatment furnace. An inside of the furnace was evacuated and then filled with an argon gas, and further evaluated gain. This procedure was repeated three times. Thereafter, while flowing a hydrogen gas at a flow rate of 5 L/min through the furnace, the sample particles were heated to 400°C at a temperature rise rate of 5°C/min and held at that temperature for 3 h to subject the particles to reducing treatment. Thereafter, the particles were cooled down to 140°C at which supply of the hydrogen gas was stopped. Meanwhile, it was confirmed that the sample withdrawn in this condition was constituted of an α-Fe single phase and had a specific surface area of 57 m²/g. Successively, while flowing an ammonia gas at a flow rate of 10 L/min through the furnace, the particles were subjected to nitridation treatment at 135°C for 12 h. Thereafter, while flowing an argon gas through the furnace, the particles were cooled down to room temperature at which supply of the argon gas was stopped, and the inside atmosphere of the furnace was replaced with air over 3 h.

### <Analysis and evaluation of resulting sample>

As a result of subjecting the resulting particles to XRD and ED analysis, the particles comprised Fe₁₆N₂ as a main phase, and the content of the Fe₁₆N₂ compound phase therein as measured by Mössbauer spectrum was 83%. In addition, the above particles were amorphous particles having an average primary particle size of 40 nm, and had a specific surface area of 58 m²/g. As a result of measuring the Ti content by ICP analysis, the molar ratio of Ti to Fe was 0.06%. As a result of measurement of magnetic properties of the particles, it was confirmed that the particles had a saturation magnetization value σₛ of 183 emu/g, a coercive force H_{c} of 1230 Oe and BHₘₐₓ of 7.5 MGOe .

### Example 2:

Goethite particles having a minor axis diameter of 12 nm, a major axis diameter of 276 nm, an aspect ratio of 23.00 and a specific surface area of 101 m²/g were produced from ferric chloride, sodium hydroxide and sodium carbonate by the same method as in Example 1. The resulting goethite particles were separated by filtration using a nutshe, and repulped using a disper mixer so as to prepare a slurry having a concentration of 5 g/L in pure water. The resulting slurry was held at a pH value of 7.0 using a dilute nitric acid solution while stirring, and an aqueous solution of gallium nitrate was added dropwise thereto at room temperature in such an amount that a molar ratio of Ga to Fe contained in the goethite particles was 20%. After 5 h, a water glass solution comprising SiO₂ in an amount of 5% by weight was added dropwise to the resulting reaction mixture at 40°C over 5 h such that the content of Si in the SiO₂-coated goethite particles was 1% by weight. The resulting particles were separated again by filtration using a nutsche, and washed with pure water in an amount of 200 mL per 5 g of the sample. Successively, the obtained particles were dried at 55°C using a vacuum dryer. The content of Si in the resulting sample was 1.02% by weight. Further, only the aggregated particles having a particle size of not more than 180 *µ*m were extracted using an atomizer mill and a vibrating sieve. Then, the resulting particles were subjected to dehydration treatment at 120°C, thereby obtaining hematite.

Next, the above obtained sample particles were subjected to reducing treatment and then to nitridation treatment by the same method as in Example 1. Specifically, the reducing treatment was carried out at 420°C for 3 h. Meanwhile, the sample withdrawn in this condition was constituted of an α-Fe single phase and had a specific surface area of 76 m²/g. The gas used upon the nitridation treatment was a mixed gas comprising an ammonia gas, a nitrogen gas and a hydrogen gas at a mixing ratio of 7:2.9:0.1, and the nitridation treatment was carried out at 155°C for 7 h while flowing the mixed gas at a flow rate of 10 L/min in total.

As a result of subjecting the resulting particles to XRD and ED analysis, the particles comprised Fe₁₆N₂ as a main phase, and the content of the Fe₁₆N₂ compound phase therein as measured by Mössbauer spectrum was 72%. In addition, the above particles had an average primary particle size represented by a minor axis diameter of 11 nm and a major axis diameter of 194 nm, and a specific surface area of 77 m²/g . As a result of measuring the Ga content by ICP analysis, the molar ratio of Ga to Fe was 20%. As a result of measurement of magnetic properties of the particles, it was confirmed that the particles had a saturation magnetization value σₛ of 179 emu/g, a coercive force H_{c} of 2810 Oe and BHₘₐₓ of 6.9 MGOe .

### Example 3:

The sample was obtained by the same method as in Example 2 except that the pH value was held at 8.5, and an aqueous solution of aluminum nitrate as an Al raw material was first added dropwise to a slurry of the goethite particles in such an amount that a molar ratio of Al to Fe contained in the goethite particles was 0.8%, and thereafter the surface of the respective goethite particles was coated with yttrium in an amount of 700 ppm by weight in terms of Y element and then coated with aluminum in an amount of 3000 ppm by weight in terms of an Al element. Only the aggregated particles having a particle size of not more than 150 *µ*m were extracted using an atomizer mill and a vibration sieve. The reducing treatment was carried out in the same manner as in Example 1. Meanwhile, it was confirmed that the sample withdrawn in this condition was constituted of an α-Fe single phase and had a specific surface area of 88 m²/g. In addition, the nitridation treatment was carried out at 142°C for 15 h while flowing an ammonia gas at a flow rate of 5 L/min. As a result of measuring the Y and Al contents by ICP analysis, it was confirmed that the molar ratios of Y and Al to Fe were 689 ppm by weight and 1.07% by weight, respectively.

As a result of subjecting the resulting particles to XRD and ED analysis, the particles comprised Fe₁₆N₂ as a main phase, and the content of the Fe₁₆N₂ compound phase therein as measured by Mössbauer spectrum was 86%. In addition, the above particles had an average primary particle size represented by a minor axis diameter of 11 nm and a major axis diameter of 193 nm, and a specific surface area of 85 m²/g. As a result of measurement of magnetic properties of the particles, it was confirmed that the particles had a saturation magnetization value σₛ of 192 emu/g, a coercive force H_{c} of 2880 Oe and BHₘₐₓ of 7.5 MGOe.

### Example 4:

Goethite particles having a minor axis diameter of 14 nm, a major axis diameter of 150 nm, an aspect ratio of 10.71 and a specific surface area of 115 m²/g were produced from ferric chloride, manganese chloride, sodium hydroxide and sodium carbonate by the same method as in Example 2. At this time, the manganese content was controlled such that the molar ratio of Mn to Fe contained in the goethite particles was 1.5%. The resulting goethite particles were separated by filtration using a nutshe, and fully washed with pure water in an amount of 200 mL per 5 g of the sample. Further, in the same manner as in Example 2, the obtained particles were coated with SiO₂ in an amount of 3000 ppm in terms of Si. Successively, the obtained particles were dried at 55°C using a vacuum dryer. Further, only the aggregated particles having a particle size of not more than 90 *µ*m were extracted using an atomizer mill and a vibrating sieve. Then, the resulting particles were subjected to reducing treatment and then to nitridation treatment in the same manner as in Example 2. Meanwhile, it was confirmed that the sample withdrawn in the condition after completion of the reducing treatment was constituted of an α-Fe single phase and had a specific surface area of 82 m²/g.

As a result of subjecting the resulting particles to XRD and ED analysis, the particles comprised Fe₁₆N₂ as a main phase, and the content of the Fe₁₆N₂ compound phase therein as measured by Mössbauer spectrum was 74%. In addition, the above particles had an average primary particle size represented by a minor axis diameter of 13 nm and a major axis diameter of 135 nm, and a specific surface area of 82 m²/g. As a result of measuring the Mn content by ICP analysis, the molar ratio of Mn to Fe was 1.5%. As a result of measurement of magnetic properties of the particles, it was confirmed that the particles had a saturation magnetization value σₛ of 197 emu/g, a coercive force H_{c} of 880 Oe and BHₘₐₓ of 6.3 MGOe .

### Example 5:

Goethite particles having a minor axis diameter of 17 nm, a major axis diameter of 110 nm, an aspect ratio of 6.47 and a specific surface area of 123 m²/g were produced by the same method as in Example 1. The resulting goethite particles were subjected to heat treatment at 300°C in air for 1 h, thereby obtaining hematite particles. Successively, only the aggregated particles having a particle size of not more than 90 *µ*m were extracted using an atomizer mill and a vibrating sieve. The thus extracted hematite particles as a whole were intimately mixed with an aqueous solution of germanium tetrachloride as a Ge raw material in such an amount that a molar ratio of Ge to Fe contained in the hematite particles was 6.2%. The resulting mixture was heated to 250°C in air at a rate of 3°C/min to subject the particles to dehydration and decomposition by nitric acid. The resulting particles were then subjected to reducing treatment at 550°C for 3 h in a 100% hydrogen flow. The thus treated particles were cooled down to 100°C in the furnace while flowing hydrogen therethrough. Meanwhile, it was confirmed that the sample withdrawn in this condition after the reducing treatment was constituted of an α-Fe single phase and had a specific surface area of 25.6 m²/g. Then, the flowing gas was replaced with a 100% ammonia gas, and the ammonia gas was flowed at a rate of 4 L/min. The resulting particles were heated to 155°C at a temperature rise rate of 5°C/min, and subjected to nitridation treatment at 155°C for 13 h.

As a result of subjecting the resulting particles to XRD and ED analysis, the particles comprised Fe₁₆N₂ as a main phase, and the content of the Fe₁₆N₂ compound phase therein as measured by Mössbauer spectrum was 77%. In addition, the above particles had an average primary particle size represented by a minor axis diameter of 32 nm and a major axis diameter of 53 nm, and a specific surface area of 25.3 m²/g As a result of measuring the Ge content by ICP analysis, the molar ratio of Ge to Fe was 6.2%. As a result of measurement of magnetic properties of the particles, it was confirmed that the particles had a saturation magnetization value σₛ of 156 emu/g, a coercive force H_{c} of 1819 Oe and BHₘₐₓ of 9.1 MGOe.

### Example 6:

The same procedure as in Example 4 was conducted except that Ni was used instead of Mn. An aqueous solution of nickel nitrate was used as an Ni raw material, and the amount of Ni used was controlled such that the molar ratio of Ni to Fe was 1.5%. However, the particles were uncoated with SiO₂. As a result, the obtained sample was goethite having a minor axis diameter of 14 nm, a major axis diameter of 146 nm, an aspect ratio of 10.43 and a specific surface area of 116 m²/g . The resulting goethite particles were separated by filtration using a nutshe, and fully washed with pure water in an amount of 200 mL per 5 g of the sample. Successively, the obtained particles were dried at 55°C using a vacuum dryer. Further, only the aggregated particles having a particle size of not more than 100 *µ*m were extracted using an atomizer mill and a vibrating sieve. Then, in the same manner as in Example 5, the resulting particles were subjected to reducing treatment at 490°C for 3 h in a 100% hydrogen flow. The thus treated particles were cooled down to 100°C in the furnace while flowing hydrogen therethrough. Meanwhile, it was confirmed that the sample withdrawn in this condition after the reducing treatment was constituted of an α-Fe single phase and had a specific surface area of 36.4 m²/g. Then, the flowing gas was replaced with a 100% ammonia gas, and the ammonia gas was flowed at a rate of 4 L/min. The resulting particles were heated to 155°C at a temperature rise rate of 5°C/min, and subjected to nitridation treatment at 155°C for 13 h.

As a result of subjecting the resulting particles to XRD and ED analysis, the particles comprised Fe₁₆N₂ as a main phase, and the content of the Fe₁₆N₂ compound phase therein as measured by Mössbauer spectrum was 84%. In addition, the above particles had an average primary particle size represented by a minor axis diameter of 29 nm and a major axis diameter of 46 nm, and a specific surface area of 36.2 m²/g. As a result of measuring the Ni content by ICP analysis, the molar ratio of Ni to Fe was 1.5%. As a result of measurement of magnetic properties of the particles, it was confirmed that the particles had a saturation magnetization value σₛ of 197 emu/g, a coercive force H_{c} of 2478 Oe and BHₘₐₓ of 7.8 MGOe.

### Example 7:

Goethite particles having a minor axis diameter of 22 nm, a major axis diameter of 145 nm, an aspect ratio of 6.59 and a specific surface area of 109 m²/g were produced from ferric sulfate, sodium hydroxide and sodium carbonate. The resulting goethite particles were separated by filtration using a nutshe, and the obtained particles were fully washed with pure water in an amount of 120 mL per 5 g of the sample. Successively, the obtained particles were dried at 60°C using a vacuum dryer, and only the aggregated particles having a particle size of not more than 125 *µ*m were extracted using an atomizer mill and a vibration sieve. The thus extracted goethite particles were further subjected to dehydration treatment at 300°C, thereby obtaining hematite. The thus obtained hematite particles as a whole were intimately mixed with a solution of dinitrodiammine platinum as a Pt raw material in such an amount that a molar ratio of Pt to Fe contained in the hematite particles was 0.07%. The resulting mixture was heated to 220°C in air at a rate of 3°C/min to subject the particles to dehydration and decomposition. Thereafter, PVA (polymerization degree: 800) was added to the resulting particles in such an amount that a solid content of PVA was 7% based on the weight of the particles, and the resulting mixture was molded into disk-shaped pellets each having a diameter of 10 mm and a height of 2.5 mm. The thus obtained disk-shaped pellets were subjected to reducing treatment and nitridation treatment in the same manner as in Example 1.

As a result of subjecting the resulting particles to XRD and ED analysis, the particles comprised Fe₁₆N₂ as a main phase, and the content of the Fe₁₆N₂ compound phase therein as measured by Mössbauer spectrum was 82%. In addition, a part of the above disk-shaped pellets were pulverized to obtain particles, so that the obtained particles had an average primary particle size represented by a minor axis diameter of 94 nm and a major axis diameter of 130 nm, and a specific surface area of 16.3 m²/g As a result of measuring the Pt content by ICP analysis, the molar ratio of Pt to Fe was 0.07%. As a result of measurement of magnetic properties of the particles, it was confirmed that the particles had a saturation magnetization value σₛ of 179 emu/g, a coercive force H_{c} of 2315 Oe and BHₘₐₓ of 7.8 MGOe.

### Example 8:

A sample was produced in the same manner as in Example 2. The sample was goethite having a minor axis diameter of 12 nm, a major axis diameter of 276 nm, an aspect ratio of 23.00 and a specific surface area of 101 m²/g. The resulting goethite particles were repulped in the same manner as in Example 2. The resulting slurry was held at a pH value of 7.5, and an aqueous solution of zinc nitrate as a Zn raw material was added dropwise thereto in such an amount that the molar ratio of Zn to Fe contained in the goethite particles was 3%. Thereafter, in the same manner as in Example 2, water glass in an amount of 1% by weight in terms of SiO₂ was added dropwise to the resulting mixture. The thus obtained sample had a Si content of 1.02% by weight. Then, only the aggregated particles having a particle size of not more than 125 *µ*m were extracted using an atomizer mill and a vibrating sieve. The resulting particles were subjected to reducing treatment by the same method as in Example 1. Meanwhile, the sample withdrawn in this condition was constituted of an α-Fe single phase and had a specific surface area of 75 m²/g. Further, the obtained particles were subjected to nitridation treatment at 148°C for 15 h while flowing an ammonia gas at a rate of 5 L/min.

As a result of subjecting the resulting particles to XRD and ED analysis, the particles comprised Fe₁₆N₂ as a main phase, and the content of the Fe₁₆N₂ compound phase therein as measured by Mössbauer spectrum was 87%. In addition, the above particles had an average primary particle size represented by a minor axis diameter of 11 nm and a major axis diameter of 192 nm, and a specific surface area of 73 m²/g . As a result of measuring the Zn content by ICP analysis, the molar ratio of Zn to Fe was 8.0%. As a result of measurement of magnetic properties of the particles, it was confirmed that the particles had a saturation magnetization value σₛ of 175 emu/g, a coercive force H_{c} of 2573 Oe and BHₘₐₓ of 8.0 MGOe .

### INDUSTRIAL APPLICABILITY

The ferromagnetic particles according to the present invention have a large maximum energy product BHₘₐₓ and therefore can be suitably used as a magnetic material. In addition, the resulting ferromagnetic particles are excellent in productivity and economy, and therefore can be used in extensive applications of magnetic materials such as anisotropic magnets and bonded magnets.

## Claims

1. Ferromagnetic particles comprising an Fe₁₆N₂ compound phase in an amount of not less than 70% as measured by Mössbauer spectrum, and at least one metal element X selected from the group consisting of Mn, Ni, Ti, Ga, Al, Ge, Zn, Pt and Si in such an amount that a molar ratio of the metal element X to Fe is 0.04 to 25%, the ferromagnetic particles having a BHₘₐₓ value of not less than 5 MGOe.

2. The ferromagnetic particles according to claim 1, further comprising an Si compound and/or an Al compound with which a surface of the respective ferromagnetic particles is coated.

3. The ferromagnetic particles according to claim 1 or 2, wherein a saturation magnetization value σₛ of the ferromagnetic particles is not less than 130 emu/g, and a coercive force H_{c} of the ferromagnetic particles is not less than 600 Oe.

4. The ferromagnetic particles according to any one of claims 1 to 3, wherein a BET specific surface area of the ferromagnetic particles is 3 to 80 m²/g.

5. A process for producing the ferromagnetic particles as defined in any one of claims 1 to 4, comprising the step of subjecting iron compound particles previously passed through a mesh having a size of not more than 250 *µ*m to reducing treatment and then to nitridation treatment, said iron compound particles used as a starting material being formed of iron oxide or iron oxyhydroxide which has a BET specific surface area of 50 to 250 m²/g, an average major axis diameter of 50 to 450 nm and an aspect ratio (major axis diameter/minor axis diameter) of 3 to 25 and comprises a metal element X (wherein X is at least one element selected from the group consisting of Mn, Ni, Ti, Ga, Al, Ge, Zn, Pt and Si) in such an amount that a molar ratio of the metal element X to Fe is 0.04 to 25%.

6. The process for producing the ferromagnetic particles according to claim 5, wherein a surface of the respective iron compound particles is further coated with an Si compound and/or an Al compound, and the resulting coated particles are passed through a mesh having a size of 250 *µ*m and then subjected to the reducing treatment.

7. An anisotropic magnet comprising the ferromagnetic particles as defined in any one of claims 1 to 4.

8. A bonded magnet comprising the ferromagnetic particles as defined in any one of claims 1 to 4.
